**Europäisches Patentamt**

**European Patent Office**

**Office européen des brevets**

(19)

(11) **EP 1 139 250 A1**

(12) **EUROPEAN PATENT APPLICATION**

| | |
|---|---|
| (43) Date of publication:<br>**04.10.2001 Bulletin 2001/40** | (51) Int Cl.⁷: **G06F 17/60**, G06F 17/30 |

(21) Application number: **00610031.7**

(22) Date of filing: **31.03.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• **Keith, Klaus Melgard**<br>**7100 Vejle (DK)**<br>• **PETERSEN, Kim**<br>**7100 Vejle (DK)** |
| (71) Applicant: **Net4you A/S**<br>**7100 Vejle (DK)** | (74) Representative: **Rasmussen, Torben Ravn et al**<br>**Internationalt Patent-Bureau**<br>**Hoeje Taastrup Boulevard 23**<br>**2630 Taastrup (DK)** |

(54) **A method for ensuring conscious response**

(57) The present invention concerns a method for ensuring conscious response from a person to a signal; wherein said method is adapted to perform the steps of providing a signal varying in time and comprising at least one variable utility informational part and at least one variable informational contents part; presenting said signal to said person, said informational contents part prompting said person to perform an input; monitoring any detected input from said person in at least one time window; initiating one of at least two different operations depending on correspondence between said input and a predetermined reply, at least one of said operations comprising repetition of said steps.

Fig. 1

**EP 1 139 250 A1**

Printed by Jouve, 75001 PARIS (FR)

**Description**

Technical Field

The present invention relates to a method and a system for ensuring conscious response from a person to a signal. Furthermore, the invention relates to the use of the method as well as computer programs directly loadable into the internal memory of a digital computer for the implementation of the method.

Technical Background for the Invention

Ensuring an attentive audience, e.g. for commercial presentations, is an old well-known problem. Providers of commercials would like to ensure the contents of the commercials are perceived.

With the growing popularity and increasing importance of the internet, the demand for advertising on the internet is also increasing. Usually, the advertisers pay money to get their commercial or "banner" shown on the internet.

In the same way as newspapers and television are subsidized by commercials, the internet or internet connections may be subsidized by commercials.

One problem when advertising on the internet is that such advertising might be filtered off by a hacker. The term "hacker" is used here to refer to a person, who intends to filter off or avoid commercials.

Computer programs exist, which are designed to prevent a user of an internet connection from viewing commercials on the internet. An example of such a program is Web Washer from Siemens, which can filter off commercials from the end user of the internet connection.

A program for filtering the signal received from a server in order to avoid commercials will typically use a list of IP addresses to filter off images from unwanted providers. Examples of this, and other means to avoid commercials might be found in US 5,987,606.

Networked systems have been developed to monitor people, e.g. US 5,997,476.

Systems are also known, which may be used on the internet for ensuring that commercials are seen by an audience. Such a system might be a system, which counts the number of clicks on a commercial banner. Providers have established systems, which demand a certain number of clicks on commercials, e.g. 8 or 16, in order to receive some kind of service, which may be free.

For showing commercials systems also exist which are working by simply surveying the traffic to and from the computer of the subject. A drawback of such a system is that a hacker might duplicate the signals indicating that certain commercials have been watched and thus trick the host computer into believing the subject has been watching said commercials.

Lotteries are also known; if the user clicks on a sufficient number of commercial pages, he/she may participate in a lottery.

Systems are also known, which directly pay people to watch commercials.

Systems are also known, wherein the user has to click on an object moving on the screen in order to participate in a competition. Such competitions are well known to catch attention on the internet.

Thus, a low cost versatile method for distribution of information, which can be targeted at a specific person or group of persons, and which provides feedback of the impact on the person have long been sought after.

Disclosure of the Invention

The present invention concerns a method for ensuring conscious response from a person to a signal; wherein said method is adapted to perform the steps of

a) providing a signal varying in time and comprising at least one variable utility informational part and at least one variable informational contents part;
b) presenting said signal to said person, said informational contents part prompting said person to perform an input;
c) monitoring any detected input or the absence thereof from said person in at least one time window;
d) initiating one of at least two different operations depending on correspondence between said input or the absence thereof and a predetermined reply, at least one of said operations comprising repetition of the steps a), b), c), and d).

One effect of the method according to the present invention is that it is ensured that a person is receiving and understands the contents of at least part of a signal - that he or she is conscious. As used herein, the term "conscious" means that the person the signal is presented to understands the contents of at least part of the signal.

The term "signal" used in the present description and claims refers to a signal comprising information, which is utility information and at least one informational contents part. The signal generally comprises information in encoded form, e.g. digital information. Thus, for the purpose of the present invention, the term "signal" refers both to the physical signal itself and to the information embedded therein. The signal normally vary in time, and is sent, transmitted or conveyed form one place and time to another place and time, i.e. from one point in the time-space continuum to another. A signal according to the present invention may consist of a discontinuous series of parts, e.g. images and/or sounds. The signal may be a discontinuous or a continuous signal. The term "transmit" is used about conveying at least one signal from one point to another. The signal may be distorted, transformed or altered before being received.

The term "informational contents part" used in the description and claims, and the related term "information contents", encompass information, which a subject may perceive from a signal, e.g. a color, a character, a symbol, a number, the number of times a signal is repeated, the number four from a signal comprising the symbol "4" or the equation "2+2=", the word "lion" from an image of such an animal, etc. The information contents are determined by the information a subject perceives when receiving the signal, and said signal may be handled by a non-subject, e.g. a computer, before being presented to the subject. The informational contents part or the information contents may be defined as any information which a perceiving subject may deduce from the signal as received by said subject.

The term "utility informational part" used in the description and claims refers to informational payload in the sense it is information to be conveyed to a subject. Such a utility informational part may comprise e.g. commercials, messages, information, alerts, entertainment, educational information, or any combination thereof. As an example, the utility informational part may comprise commercials and other information, which can be found on the internet. The utility informational part may comprise an informational contents part, and vice-versa.

The term "prompt" used in the description and claims refers to conveying a certain part of information, which suggests that a subject at some time should perform a certain action and/or operation.

The term "input" used in the description and claims in a broad sense, implying absence and/or presence of response from a subject. Input may be conveyed from the subject by an input part. Input may be done e.g. by a mouse, a keyboard, a keypad, a joystick, contacts controlled by the subject's feet, or a microphone. "Output" is provided to the subject. Output may be e.g. visual or auditory. The method may comprise or use an input part, handling any input, and an output part, handling any output.

A "time window" is a time interval defined by a point in time at the beginning of the time window and a point in time at the end of the time window. The time window may be defined as to comprise an infinite span of time. The term "timely" means in the time window.

The invention imply the application of a time window, which may be defined as flexibly as needed, i.e. it may be defined so as to imply that a reply does not have to be input by the subject before prompted.

It should be noted that the method according to the present invention may also monitor the absence of an input, and evaluate this in step d).

The method decides when to prompt the subject for certain input to be determined by the system; in other words, said input is predetermined, i.e. a message or other information is conveyed to a subject inciting the subject to perform a certain input.

The present invention in general relates to a method and a system, e.g. a computer system, for testing response to a signal. The invention concerns in particular a system and a method for testing conscious response of at least one subject to a signal. Furthermore, the present invention relates to a method for ensuring, controlling and/or providing feedback of the transmission of at least one signal to at least one subject.

The term "system" is used to describe any configuration of apparatus, equipment and/or device(s) which may be used in any embodiment of the present invention.

A "computer" for the purposes of the present description and claims refers to a digital computer with a memory, said memory comprising or being allowed to comprise instructions of an executable program, said computer being able to execute said instructions. A computer with various peripherals is described in EP 0 767 419. A person skilled in the art will immediately realize which parts of a computer may be necessary for carrying out the present invention.

A method according to the present invention may be used for ensuring that said person is perceiving said signal.

The method described in the present application may further be adapted for the evaluation of a person's perception of at least part of a signal. The method may be used to check whether the person actually understands the contents of a transmitted signal, and does have focus on it.

The invention thus in particular concerns a method for surveying intelligent interaction between man and machine, by making the machine giving varying output, which the subject has to respond to in an intelligent fashion, i.e. depending on the character of the varying output. Such an intelligent input may be a choice of different possibilities.

The invention may be implemented on computers. The invention may test at certain intervals whether a subject is responding intelligently and/or consciously to a part of a signal. Depending on the outcome of said test, certain predefined actions may be performed.

In one embodiment of the present invention, the predetermined reply depends on the informational contents part and/or corresponds to this.

**EP 1 139 250 A1**

The invention may be applied in various fields, e.g. as a dead-man control, an automatic safety device; in clinical trials, research, marketing, and/or with the internet.

One use of the present invention is allowing a signal to comprise a payload of information, i.e. information which should be transmitted to a subject. The present invention provides means for giving feedback after and/or while transmitting such payload of information.

By prompting a subject at certain intervals for parts of the information (informational contents parts) embedded in the signal, it is ensured that the signal and probably any payload information is transmitted to the subject. Such informational contents part may be characters, parts of characters, e.g. letters, words, etc., and may be displayed to the user, in order to be prompted later or simultaneously, not ruling out the possibility that the actual prompt may be presented to the subject before the informational contents part is transmitted.

Detailed disclosure

The invention and the ideas of the invention will now be further elucidated.

An aspect of the invention concerns a method, wherein the correspondence in step d) is evaluated by explicit or implicit comparison between said input and said predetermined reply. The input may be compared directly with the predetermined reply, or it may be necessary in order for the method to continue working properly. In the latter case, only the user of the method may be made aware of missing correspondence between input and predetermined reply.

"Explicit comparison" means comparison with a predefined answer, or a range of possible answers. "Implicit comparison" means that a certain correct answer, or a certain correct range of answers, will lead to the desired result. This is typically used for encoding, where the correct key will make it possible to decode certain information. Another example of implicit comparison is, where an assembly of particles with a particle size distribution is passing through a net. This constitutes an implicit comparison of the size of the mesh of the net and the sizes of the particles. Yet another example is the act of providing a key and a lock. This provides means for performing an actual comparison between lock and key, thus it may be regarded as an implicit comparison.

Explicit comparison may be used for surveying and/or controlling the access of a subject to a certain service. Implicit comparison may conceal the subjects input for a provider, thus ensuring a certain degree of privacy.

An aspect of the present invention concerns a method, wherein the steps are being performed in the order a), b), c) and d). Thus, a simple sequential program may be used to implement the method. Many other sequences are feasible; it is thus possible to diverge from the suggested order a), b), c) and d), and it is possible to implement the method in order for more than one single step to be performed at the same time, e.g by multitasking.

An aspect of the method also concerns cases, wherein at least part of said signal is encoded, allowing correspondence between said input and said predetermined reply to be necessary for decoding said encoded part of said signal. The entire signal being transmitted may be encoded, e.g. by the server. Or only messages, which are send to a browser application, may be encoded, thus enabling an application showing commercials to continue display of commercials, even if the browser begins to show garbage. Or, the server may simply refuse to transmit information to the client when the input is wrong.

Coding may provide several advantages. Encoding may make it difficult for strangers to understand the information. It will be possible to provide different parts of information with different degrees of security. And it will be possible to hinder communication to a person, who does not know the correct codes.

An aspect of the invention concerns a method, wherein correspondence between said input and said predetermined reply is a prerequisite for subsequent correct presentation in said step b). An encoded signal may be decoded by a small receiving application, and the sender of the information does not have to know if the receiver is correctly perceiving it.

According to the present invention, the utility informational part may comprise the informational contents part, or the informational contents part may comprise the utility informational part. Thus, a commercial might be shown, which contains a question that is prompted, and/or a prompt may contain an embedded commercial. This may ensure more focus on e.g. commercials.

A signal may comprise a utility informational part, which might be a commercial. A part of the signal may be a payload part, which is desirable for a person to receive. It should be emphasized, however, that the utility informational part and the informational contents part may be identical. This provides for an exchange of service and perusal of commercials.

The method according to the present invention naturally comprises alterations of the signal, whereby the signal is subjected to a at least one variation comprising an alteration chosen among changing the signal, changing the informational contents part of the signal, changing the utility informational part of the signal, or any combination thereof. This may make it harder for a hacker to filter off commercials.

Furthermore, variations of the contents of the predetermined reply and/or of the informational contents part are allowed. In any way, the predetermined reply should be allowed to depend on the contents of the signal, the se-

4

quence of presentation of different parts of the signal, the contents of the informational contents part, the timing of the informational contents part and/or the utility informational part, i.e. the time of presentation of the informational contents part and/or the utility informational part, or any combination thereof. As an example, a user may be requested to count the number of commercials between two informational contents parts or certain commercials, and the predetermined reply will correspond to said number. Such a method will make it more interesting to use for a recipient.

The method according to aspects of the invention may have several advantages. It monitors persons and detects if a person is reacting (consciously). It may be used in a system which is providing a signal, said signal being discontinued in the absence of a person's response to said signal. The invention also concerns a system wherein said signal contains information which said person has to perceive in order to detect the information prompting said person to supply input to said system.

The present invention also concerns a method as described above, wherein any utility informational part which the signal encompasses, might be altered. Thus, the signal may be subjected to a variation comprising changing the signal, the informational contents part of the signal, the utility informational part of the signal or any combination thereof.

A method according to the present invention may be used to ensure a person is alert, especially because the informational contents part may be altered because it is variable. Other alterations are possible according to the present invention. Alterations of the signal could also comprise altered timing and/or sequence. The informational contents parts may be presented with random intervals. It is valuable that the informational contents part and/or the utility informational part is variable, in order to impede or discourage automatization of the response process.

The term "random" is here used in a very broad sense, e.g. the outcome of the toss of a coin is considered random, the decimals of pi may be considered random, in the sense knowledge of a former digit does not make it possible to make conclusions about the next digit, noise may be considered to be random, the numbers from any random number generator or any Monte Carlo method are considered random, or any assembly or sequence of numbers which has high entropy might be considered random. Random numbers may be generated by a routine, as the one described below. In a similar way, the term "randomly" is used in a broad sense, e.g. according to an algorithm based on random numbers. Thus, a "random signal" changes from time to time. It may be hard or impossible to predict by the subject. The outline of a random number generator is presented below.

It might be of value to let the continuation of the method be dependent of the subject's response, the presence and/or absence of input, or whether it is considered a correct input. Thus, the invention also concerns a method, wherein at least one of said operations in step d) comprises the termination of said method. Another of the operations may comprise continuation of said monitoring process and/or the method. This means that the method may continue if a person stays alert.

An important advantage of the invention is the ability to let the method control other processes. Such a control may be implemented by allowing at least one of said operations to comprise the termination of another process. This may be used e.g. in an embodiment, which will continue an internet connection as long as the user is actively perusing the commercials.

It is possible to use computers in the implementation of the present invention. The invention also concerns the application of at least one computer. The method according to the present invention is easy to implement on a computer.

The present invention could be implemented by using a client or client part, and a server or server part. The server can be regarded as the safe side and the client as the unsafe side, because an end-user will often have full access to the client but only limited restricted access to the server.

The terms "server" and "client" are presently used in various senses. However, a person skilled in the art will immediately realize the correct interpretation from the context. A "server-client system" is used in connection with a data process, in which at least one controlling part, a server, and at least one controlled part, a client, are involved. A server and client may be located physically close to each other or separated by any distance. A client may be a program and/or a computer, which is adapted to be controlled from another place. A server may be a program and/or a computer which is adapted to control at least one client. Typically, the client is at an end-user or associated with an end-user, and thus the term client may be interpreted in a broad sense to encompass an end user.

While the server may comprise several logical servers or services, we will for simplicity in some case refer to the server in singular. In the same way, the client may comprise several components or programs, but will also in some cases be referred to in singular. The person skilled in the art will be able to implement the present invention with any numbers of servers and/or clients. For the purposes of the present application, unless otherwise stated, the terms client and server are meant to signify physical and/or logical client and server, respectively.

An example of a system comprising a "client" or an end-user as well as a "server" is disclosed in US 5,987,606.

One advantage of the present invention is the fact that a server may be located in a secure area, while a client may be located in an un-secure area, ensures that a hacker will have difficulty in breaking the system, because the server is in the secure area.

Note that a client may be adapted as to compare the detected input with the expected or predetermined input.

Suitably the expected input may be transmitted to the client in encoded form.

Needless to say, the number of servers and clients used is irrelevant as far as the present invention is concerned. In order to facilitate the description, in most cases one server and one client will be used in the description, without in any way restricting the scope of protection of the present application. The ideas and principles, i.e. the invention, may also be used with e.g. two clients and no server, and two servers and no client. This will be immediately clear to a person skilled in the art.

In one embodiment of the present invention, a server program controls the internet access from the computer by controlling a client program therein. Such a client program may dial a server in order to establish a connection to the internet. Furthermore, the client program may initialize a browser, making it run, and the client program may give the browser instructions as to which home page to show when it starts.

In one embodiment of the present invention, commercials are presented to a subject, said commercials comprising an informational contents part. The provider of the commercials might subsidize the internet connection in order to get commercials shown to the subject.

The dialog between client and server may be implemented in various ways without diverging from the present invention, and the technical details may be worked out straightforwardly by a person skilled in the art.

Partly of relevance to the internet, partly of relevance to security, is the possibility of using a client and a server with the invention. The method may be applying at least one client and at least one server. The server may be adapted to perform said step d). According to an aspect of the invention, said method may be applying at least one client computer and at least one server computer, said server computer being adapted as to perform said step d). Thus, it is possible to have a secure side, i.e. the server side, and an un-secure side, the client side. The server may control the client. This makes it harder for a hacker - and also illegal in some states - to tamper with the method, because the server may be on a computer, which is not the property of and/or easily accessible by the user or subject.

If a client is using the method to connect to the internet, the method may be used to allowing a physical or logical server to restrict the access of a client to the internet, depending on correspondence in said step d). According to one aspect of the invention, it concerns a method wherein a server is restricting the access of a client to the internet, depending on correspondence in said step d). Thus, internet access may be provided as long a the person is correctly answering questions.

A server side applying the method (or performing parts of it) may suitably be divided in more parts. This will hinder hackers in tampering with the method. According to an aspect of the present invention, the method may be implemented such that said step a) and said step d) are performed using at least two different logical servers. One of these servers could suitably be transmitting images to the user, while the other is performing the actual comparison of input and predetermined replies, thus deciding whether the transmission should be continued. This provides for a further security aspect, as it will hinder a hacker in uploading a virus to the logical server performing step d).

Of special relevance is a method, which is being adapted to allowing said server to perform said step d). A secure server part ensures that a hacker will have difficulty directly reading the correct answer. A client computer may be adapted to perform said step b) and/or said step c), as it might not be critical according to the present invention if a hacker modifies the client part.

The invention may be used with a network. The method may be applying at least one network connection, said network connection being disconnected by said system if the input from the person does not correspond to said predetermined reply. Thus the system may be used for providing access to any network.

The network may be applying a network connection chosen among internet connection, point-to-point connection, point-to-multipoint connection, or any combination thereof. Thus the invention is not limited to internet use.

The invention encompasses embodiments using visual and/or auditory signals. Thus, the signal may comprise a visual and/or an auditory signal. In one preferred embodiment such a visual signal is presented to a subject by a screen, preferably a computer monitor. Only one screen is necessary for such a presentation.

The provided signal according to the present invention may be visual or auditory, i.e. comprise at least one image or sound.

The use of images is advantageous because visual information is swiftly perceived by the human brain. Using sound has the advantage that verbal messages may be embedded in the signal. The (semantic) meaning of such verbal messages may be almost impossible to analyze given the present day technology, while being immediately intelligible to a normal human.

In one embodiment, the present invention concerns a computer system, which contains a large archive of pictures or commercials, say several thousands, so it will take a very long time for a hacker to gain information about all of them.

In another embodiment, the commercials are shown in an order, which is individual for each individual user, so as to prevent a hacker from simply recording a sequence of pictures in order to automatize the respond process.

In one preferred embodiment, the present invention is used to ascertain whether a subject is observing a sequence of changing commercials. The system might be implemented running with an internet connection. The subject gets free internet connection and, in return, has to watch the commercials. The system may be referred to as a "view-per-pay" system, as the subject has to view commercials in order to pay for the service. Once in a while, the subject has to respond to a question or enter a number, using e.g. a keyboard or mouse. If the subject fails to respond correctly and timely, the internet connection will be disconnected.

The present invention furthermore provides for changing commercials slightly, in order to avoid automated systems are recognizing known commercials and filtering them off. By changing the commercials slightly from time to time, it is harder for another program to recognize them, and thereby to be able to exclude them.

Thus, one use of the system according to the present invention is to be able to convey virtually the same commercials several times, without another program being able to recognize the commercials which are being repeated, because the actual digital representation of the commercial differs when the signal is repeated.

The signal may be camouflaged, so the signal may be repeated, without being recognized. This means the signal is hard to filter off for a hacker, and, therefore, it is a way of conveying information with increased security.

A possibility of the invention is the use of a codeword embedded in the commercials, which has to be an input by the subject as a response signal. This will ascertain whether the subject is conscious.

The computer system may be adapted to make sure the subject sees certain information. The subject may be presented with e.g. a picture of a bird and asked what kind of animal is shown. If the subject fails to answer, the system may conclude that the subject is not conscious, or at least not alert.

The advantage when using a picture of e.g. an animal is that with present day computer technology it is extremely difficult or impossible to make a program which recognizes the generally complicated forms of e.g. animals or other physical objects.

Thus, one aim of the present invention is to provide a system having an output, which is sufficiently complicated not to be interpreted by a computer program, e.g. an OCR (Optical Character Recognition) system or a speech recognition system.

The present invention is partly based on the inventors insight that signals are interpreted and perceived differently by living subjects and computers. While at least theoretically, a human is able to perform any operation a computer can, computers are still only able to perform basically simpler operations. If a normal child is presented with a picture of a well known animal, it will immediately recognize it. However, as concerns computers, at present a similar general symbolic computerized recognition system has not yet been developed. The present invention utilizes this deficiency in present computers in order to distinguish between conscious response and automated response. Thus, the present invention provides a method for ensuring conscious response from a person to a signal.

When images are used to convey information to the subject, those images may be intentionally distorted. E. g. lines of pixels might be inserted or deleted, or altered in any other way in order to make digital representations of the images different. Such a line of pixels may be in any direction: horizontal, vertical, or any angle with respect to horizontal. The location may be centered, at the edge, or any other place on the image.

The method according to the present invention also concerns the situation, wherein step a) comprises allowing said signal to comprise images. The use of images has the advantage that they are easily understood by a person.

The method may apply a signal, wherein said signal comprises an image, said image being subject to a variation comprising an alteration of at least a part of said image, said alteration being chosen among distortion, symmetry operations, mirroring, turning, rotation, displacement, shifting, expansion, shrinking, zoom operation, insertion of at least one pixel, deletion of at least one pixel, insertion of at least one line of pixels, deletion of at least one line of pixels, alteration of at least one pixel, alteration of at least one line of pixels, change of color, change of at least one RGB tone, inclusion of noise or any combination of thereof. Such alterations will make it difficult for a hacker to filter off parts of the signal, which have already been transmitted. Or, in other words, it will make it harder to avoid commercials by comparing them with a library of known commercials.

The invention also relates to a method, wherein said signal comprises an auditory signal. Such an embodiment may be used by blind people too. Also people without visual disabilities may be helped by said embodiment, because they may make full use of all parts of a screen all the time, without any disturbing visual elements on a screen. And, of course, auditory and visual signals may be combined. Such a combination might make it more interesting to use the method.

There might be made changes in an auditory signal. Thus, the invention furthermore concerns a method, wherein said signal comprises an auditory signal, wherein said signal is subject to a variation, said variation comprising an alteration of at least a part of said auditory signal, said alteration being any alteration chosen among volume control, frequency shift, damping, amplification, or any combination thereof. Such alterations will make it harder for a hacker to filter off unwanted parts of the signal, and to understand the contents of the auditory signal by automated means.

Any practical or suitable input device may be used with the present invention. Thus, additionally, an aspect of the invention concerns a method, wherein said input is performed on a device chosen among keyboard, keypad, joystick, trackball, mouse, touch-sensitive screen or any combination thereof. In this way the method may be adapted to a large variety of input devices, and is thus very versatile.

The signal is subject to alterations. The invention also includes a method, wherein said signal is repeated at least once. The method according to any of the preceding claims, wherein at least one part of said signal is randomly interchanged with at least one other part of said signal, and said signal is repeated at least once in the interchanged order. Again, this feature will make it harder for a hacker to use filters on the signal, and further allow the recipient of the signal to have a more interesting time perusing the signal.

The invention furthermore concerns a method, wherein at least one part of said signal is randomly interchangeable with at least one other part of said signal, and said signal is repeated at least once in the interchanged order. The embodiment in question is envisioned to make the method harder to hack. It also has a surprising effect on a subject, who is receiving the signal, which leads to more attention about every commercial.

According to the present invention, said informational contents part may comprise at least one image representing an integer number, and said predetermined reply may be said number. This allows easy input of the number by a keyboard and/or a keypad. Such an image might comprise a picture or a question, which has to be input by the person. In any way, it will be easy to ascertain whether the response is correct, and also for the person to provide the input.

Another field of use of the present invention is radio and television.

The invention furthermore concerns a method, wherein said signal comprises an audio signal being broadcasted by internet radio, radio or TV, or a video signal being broadcasted by TV. Such embodiments will prompt a subject to watch television or listen to the radio. Hereby, immediate coverage and response to information conveyed by said means is ensured and/or may be measured.

The invention also concerns a method, wherein said signal comprises a repeated sequence of commercials, wherein at least one commercial is altered digitally, which alteration makes said digital representation of said commercials differ while being recognizable as the same, i.e. identical, or virtually the same commercial by said person. In a certain aspect the invention concerns a method, wherein said utility informational part comprises a sequence of commercials, at least one of which being altered digitally, which alteration makes said digital representation of said commercials differ while being recognizable as the same commercial by said person. This means that a certain part of a sequence or e.g. a commercial may be repeated, without being digitally identical. The person will hardly notice such an alteration but it will make commercials difficult to filter off from the signal.

The invention furthermore concerns a method, wherein said commercials are being perceived as virtually unaltered by a person. In an aspect of the present invention, it concerns a method, wherein said informational contents part comprises at least one image representing an integer number, and said predetermined reply is said number. Thus it will be easy for the person to input the number with the use of e.g. a keyboard.

The method according to the present invention may be a method, wherein step b) comprises display of a number $x$ of randomly chosen images to said person, each in a time period; a number $y$ of said $x$ randomly chosen images comprising at least one visible part comprising an informational contents part in said images, said numbers $x$ and $y$ being integers. Choosing random images will lead to a surprising effect for the person looking at such images, thus ensuring attention to these.

The invention furthermore concerns a method, wherein step a) comprises allowing said signal to comprise images; step b) comprises display of a number $x$ of randomly chosen images to said person, each in a time period; a number $y$ of said $x$ randomly chosen images comprising at least one visible part comprising an informational contents part in said images, said numbers $x$ and $y$ being integers; and step c) comprises allowing input by said person of a code corresponding to said informational contents part. This is meant to ascertain said informational contents part have been received by said person. Thus, the method according to the present invention, may be a method, wherein step c) comprises allowing input by said person of a code corresponding to said informational contents part to ascertain said informational contents part have been received by said person.

The invention furthermore concerns a method, wherein the exposure is sequential exposure of said images. This may make it easy to determine which images have been presented, and in which order.

The invention furthermore concerns a method, wherein said number $x$ is 1-500, said time period is 0.01-2000 seconds, and said number $y$ is 1-250. While these numbers or only meant to be guiding, these are suitable numbers when performing a certain aspect of the present invention.

The invention furthermore concerns a method, wherein said number $x$ is 2-500, said time period is in the interval 0.02-900 seconds, and said number $y$ is 1-50, $x$ being equal to or larger than $y$.

To exemplify, the invention further concerns a method, wherein said number $x$ is 60, said commercials are being repeated at 10 seconds interval and said number $y$ is 1. These give suitable repetition times of the commercials, and an adequate frequency of input of control input.

According to the present invention, the steps may be repeated 1-1000, preferably 1-100 times, or more than 1000 times. Repetition makes it more likely that the person will remember the presented material. For the same reason the invention also concerns a method, wherein the exposure of at least a certain part of the signal is repeated 1-100 times, or more than 100 times. The invention furthermore concerns a method, wherein the exposure is being repeated e.g. 1, 2, 3, 4, 5, 6, 7, 8, 9, 10 or more than 10 times.

In an embodiment the present invention provides an interactive system, running in real time. Providing interaction is another advantage of the present invention. In order to provide such interaction, time may be regarded an important factor in the present invention. A time window may suitably be employed to restrict the time interval a subject has to respond, e.g. to a few seconds or minutes, preferably 0.02-300 sec, or 0.5-100 s, more preferred 2-10 sec, preferably 5 sec. This will make it more demanding, thus more interesting to use the method. For the same reason many images may be shown simultaneously, and the user may be allowed to respond in various ways to these, according to the present invention.

The invention furthermore concerns a method, wherein said signal comprises a moving banner containing a message to be interpreted by a subject, whose correct, timely response to said message determines whether said method should terminate an internet connection. This leads to further demands for the person, thus ensuring his/her attention.

The invention furthermore concerns a method, wherein said method is implemented using at least one computer program.

Thus the method according to the present invention may be implemented using at least one computer program. The use of a computer program makes it comparatively inexpensive to alter the details of any embodiment.

The method may be using various means of transmission of the signal. Said signal may be transmitted using at least one satellite connection or a cable modem connection, or any other suitable means. Using a satellite connection means the method may be applied at places, where no other means of communication exists. Using a modem connection means already existing means of communication may be used.

A client part may comprise a decoder. Thus, the invention in one aspect concerns a method, wherein a decoder is employed for receiving said signal, said decoder being adapted as to allowing said input to be used by said decoder. Said decoder may suitably be a signal decoder, e.g. a satellite decoder. Such decoders are already known in the art, thus no further development is necessary to employ these.

An obvious application of the method is for the use in a system for distributing commercials. Thus, the invention in one aspect concerns the use in a system for distributing commercials.

An aspect of the present invention also concerns the use of a method for controlling whether a signal is being received or transmitted. Thus, the method will know if the recipient receives a signal.

An aspect of the present invention concerns a system for performing the method according to any of the preceding claims. Thus, the method may be implemented using any known suitable means.

An aspect of the present invention concerns a system, which is performed on a computer. Implementation on computers is easy and inexpensive.

An aspect of the present invention concerns a computer system for the evaluation of input from a person, comprising at least one server computer, at least one client computer; and network means for connecting said server computer and said client computer; said computer system being adapted to perform the method according to the present invention. Such a system comprises suitable equipment for performing the method according to an aspect of the present invention.

An aspect of the present invention also concerns a computer system for performing the method according to the present invention. The method may be hardware or software implemented. Such a computer system for the evaluation of input from a person, comprising at least one server computer, at least one client computer, and network means for connecting said server computer and said client computer; said computer system may be adapted to perform the method according to the present invention. The use of a server, a client and a network for communication between the server and client, makes it possible to perform certain parts of the method according to the present invention at different places. Furthermore, a client application might be a tiny application, which does not make use of a lot of CPU time and RAM on an end-user computer.

A system according to the present invention may be used for ensuring conscious response from a person to a signal; said system may be comprising at least one server, at least one client, and network means for connecting said server and said client; and said system may be adapted to perform the steps of

ai) allowing said server to provide a signal varying in time and comprising at least one variable utility informational part and at least one variable informational contents part;

bi) transmitting said signal to said client by said network means;

ci) allowing said client to present said signal to said person, said informational contents part prompting said person to perform an input;

di) allowing said client to monitor any detected input from said person in at least one time window;

ei) transmitting said input to said server by said network means;

fi) allowing said server to compare said input with a predetermined reply, and initiating one of at least two different operations depending on the result of said comparison, at least one of said operations comprising repetition of the

**EP 1 139 250 A1**

steps ai), bi), ci), di), ei), and fi).

The client and the server may be physical computers, and thus constitute a computer system. Such client and servers are already known in the art, and can thus be used.

In any method according to the present invention, input might be encoded before and/or after the transmission process. It is not necessary that the input is transmitted in non-altered form between client and server.

The present invention furthermore concerns a computer program product directly loadable into the internal memory of a digital computer, comprising software code portions for allowing said digital computer to act as a client and/or a server part in any embodiment of the present invention, when said product is run on a computer. The present invention also concerns the transfer of such a computer program. The transfer may suitably be done by downloading using the internet.

The present invention furthermore concerns a computer program product directly loadable into the internal memory of a digital computer, comprising software code portions for allowing said digital computer to act as a client when said product is run on a computer.

The present invention furthermore concerns a computer program product directly loadable into the internal memory of a digital computer, comprising software code portions for allowing said digital computer to act as a server when said product is run on a computer.

Furthermore, the invention may make use of at least one account for each subject. Thus, the method may be comprising at least one account for said subject, said account allowing measurement of the number of correct responses by said subject. It might be of interest to incorporate such a possibility as it would make the method more flexible and provide feedback on the behavior of the subject.

The numbers of the mistakes made by a subject may be counted. Thus, the invention also concerns a method wherein the number of correct and incorrect answers is counted, and said subject is disconnected if a substantially high number of mistakes are made.

One effect of the latter embodiment is that it might make the method harder to crack for a hacker, as it will be harder and more cumbersome to find out when the method refuses or disconnects a subject.

The invention furthermore concerns the use of any method according to the present invention.

Furthermore, the present invention concerns a computer system comprising an execution environment for running an application, wherein said computer system is adapted to perform any method according to the present invention. Using a computer to run an application will make the method easy and inexpensive to implement and vary, thus providing a versatile system. Thus, the present invention concerns the use of a system, e.g. a computer system, according to the present invention.

Furthermore, an aspect of the invention concerns a computer program product directly loadable into the internal memory of a digital computer, comprising software code portions for performing the steps of a), d), or any of the steps when said product is run on a computer. Thus any or all of the steps may be executed with the use of a computer. By using a program, the computer may be used for many other tasks than the present invention.

Furthermore, an aspect of the invention concerns a computer program product stored on a computer usable medium, comprising computer readable program for causing a computer to control an execution for carrying out the method according to the present invention. Thus the whole method may be executed with the use of at least one program running on at least one computer.

Furthermore, an aspect of the invention concerns media comprising computer programs, said computer programs implementing any method according to the present invention. Such media may be convenient means for storing and distributing programs for carrying out the method according to an aspect of the present invention.

The invention furthermore concerns the transfer of computer program implementing a method as described above. Any such transfer may be used for distributing programs for implementing the method.

The present invention also concerns a system for performing a method for carrying out the invention. Such a system may make use of any known means.

A system according to the present invention may comprise at least a part located in the vicinity of said person, and another part located far from said person. Server and PC may be separated, even over long distances. They may, however, also be close to each other, e.g. system control and user may be in the same room.

The present invention also concerns any method according to the present invention, comprising an internet connection, said internet connection being disconnected by said system if the signal is discontinued. This has the effect of switching off if a person has fallen asleep or has gone to take a bath. It is furthermore useful for annoying people who want to copy an entire website.

The present invention also concerns any method according to the present invention, wherein said method comprises leaving a cookie on said person's computer. This allows recognition of the user and the storage of information on the user's computer, e.g. about the users previous behavior.

The present invention also concerns any method according to the present invention, wherein said exposure is sequential exposure of images.

The method according to the present invention may furthermore be limited by time, e.g. there may be an upper limit on the time the method will proceed, e.g. 12-24 h, preferably 1-6 h, more preferred 2-4 h, preferably 0.5 h. Thus a service provider may make it able to receive a service for a limited period of time.

The present invention also concerns any method according to the present invention, wherein the signal comprises at least one utility informational part and/or a payload signal and/or an informational payload. Thus, the method may be used for ensuring a certain part of information reaches a user, by checking the transmission of other parts.

The present invention also concerns any method according to the present invention, wherein said signal is repeated at least once. This enhances the probability that the person remembers said signal.

The present invention also concerns any method according to the present invention, wherein said method is adapted to provide feedback of the transmission of said signal.

In one embodiment according to the present invention, a person will be surfing the internet. If the user is kind enough to visit a site, the interval preceding the next prompt will be prolonged. If the present invention is used for ensuring attention to commercials, the persons interest in a particular site may be rewarded. In another embodiment, sufficiently frequent clicking of internet sites will make the internet connection stay open.

In one embodiment, the user of the internet connection will be prompted by the number of commercials between two separate prompts, or the number of commercials between two certain commercials, which may be identical.

An aspect of the present invention relates to a method for ensuring the recipient of a message is paying attention to said message, by allowing said message to comprise a key, said key being necessary for receiving a service, said service being attractive to the recipient of said message.

Several modifications may be applied to the embodiments of the present application without diverging from the scope and idea of the present invention. They may be done to make the system more interesting, thus attractive, for a user. And they may be done in order to make it harder for a hacker to read or intervene with the signal.

A further application of the present invention is for a system for ensuring commercials are being perceived by a subject, i.e. the contents of a commercial is understood by the subject.

In one embodiment, the subject is given some control of the speed of change of commercials.

In yet an embodiment, two commercials are being alternately presented, one of them may contain the response activating signal.

In one embodiment, the system according to the present invention is associated with a competition.

In one embodiment, the system comprises a puzzle, which has to be assembled correctly in order for the connection to proceed.

In one embodiment, the system comprises the need for the subject to click on a certain banner, when a certain banner appears on a computer screen.

In yet an embodiment of the invention, the number of times a user may dial the connection may be limited to once a day in order to make the user alert of the value of the connection.

In other embodiments of the present invention, several mistakes might be allowed before the system stops. Thus, a system or a method is provided, which tolerates a certain margin of errors of input. Mistakes might be acknowledged by giving a message like "first chance is used" to the user.

Commercials to be shown with the use of the present invention might be uploaded directly by the provider of the commercials. Thus, the provider of the commercials will find it easy and convenient to change the contents of the commercials from time to time, thus further enhancing the value of the invention.

For the provider of commercials for use with the present invention it might be of value to have users visit their homepages. Thus, in one embodiment of the present invention an internet connection might be continued by clicking a commercial instead of by input of a number.

Another example of an electronic promotion system has been disclosed in US 5,999,914, which might be combined with the present invention without difficulty to a person skilled in the art.

A advantage of the invention is that it may be convenient for the beginner, who needs an internet connection but knows too little about which provider to choose, to have a free internet connection temporarily. Or a free internet connection may be necessary when staying in a foreign country.

The present invention may be adapted to a number of other applications.

It may be applied for general data transmission. The invention may generally be used when a provider wishes to expose a recipient for data, where a service is provided in exchange for the recipients attention. Generally, a human user will be necessary in order to understand the digit in the image. In order to make it difficult for OCR programs to read the numbers on the images, these images may be processed in various ways, e.g. by slight rotation of the images, e.g. of the digits. According to one aspect of the present invention such rotation comprises rotating a randomly selected image 5 degrees anticlockwise. In another embodiment, an image is rotated a random number of degrees, between 0 and 90, in a random direction. In yet another embodiment of the present invention, an image is blurred by expanding some parts and allowing other parts of the image to shrink. These, and other alterations will be obvious to a person skilled in the art.

In another embodiment, the system according to the present invention is used to ascertain whether elderly and/or disabled persons are conscious and/or alert. Another use of the present invention is in surveillance of sick and/or disabled people.

The present invention may be used in many other fields, e.g. to check if a stock broker is paying attention at work, and likewise in e.g. a power plant for safety personnel.

The invention may be used for controlling communication between more than one client. Using at least two communicating clients, the method may be used for letting at least one of the two clients paying for a service. Take as an example a customer support system. One client is used by a customer, who wants support, e.g. because of problems with a computer. Another client is used by a supporter, who helps the customer. Communication between the two is mediated with a line of communication, which can transmit images between the clients, and input from the customer. In order to be allowed to use the "free" online support at a certain company, the customer will have to be exposed for commercials, which from time to time comprises a code (e.g. a picture or a password), which should be communicated back to the supporter. As long as the customer input the correct codes, the customer will be able to use the service of the supporter.

Another alternative way of using a client and a server, is a system for evaluation of the opinion of at least one user. The client part may be displaying two alternative images, and the user have to tell which image the user prefers. In order to ensure that the user is not randomly electing the images, there is embedded a code in some of the images, which has to be input.

The invention may also be used with many types of technology.

The invention may be used with phones. The provider of the telephone network, which may be based on any known type of network, may provide the services of the network, and in return get commercials exposed for users of the services. In this case the commercial would be sound on the phone. In the commercial is a control digit, which should be entered on the phone, in order for the service not to be discontinued. The present invention may also be used with mobile phones, e.g. WAP or SMS mobile phones or other systems. Thus, a display on the phone may also be utilized.

Another example is satellite television, or signals transmitted with the use of satellites.

The invention can be used with film channels, which are being received with parabola antenna.

The provider of TV broadcasts may include commercials in-the broadcasts. These commercials may comprise a control digit, which the recipient of the broadcast should enter in a parabola decoder, in order for the broadcast to be received. In this case no software is necessary in the parabola decoder, because such devices usually already comprises the necessary functions. Thus, an ordinary known parabola decoder may serve without any further modifications to be used by the client part of the present invention, for the use of the present invention.

Drawings

In the flowcharts, boxes are processes or operations, while square diamonds represents a conditional operation or a corresponding operation, which may be implied. Note that the figures and the corresponding explanation in included for explanatory reasons, not to limit the scope of the invention.

Short Description of the Figures

Fig. 1 is a schematic representation of a flowchart, depicting the use of explicit comparison.

Fig. 2 is a schematic representation of a flowchart, depicting the use of implicit comparison.

Fig. 3 is a schematic representation of sequences of transmission and/or presentation of information.

Fig. 4 is a simple, schematic representation of the relation between a server and a client.

Fig. 5 shows schematically a system comprising at least one server and at least one client.

Fig. 6 shows a simplified flowchart, representing operations performed by an embodiment of a client.

Fig. 7 and 8 represents a graphical display, which is shown on the monitor of the users computer.

Fig. 9 shows a flow chart, representing tasks of the client.

Fig. 10 shows the relationship between a client computer and servers according to an embodiment.

Fig. 11 shows a flowchart, representing operations of a server according to an embodiment.

Fig. 12 is a schematic representation of a segmenting procedure.

Detailed Description of the Figures

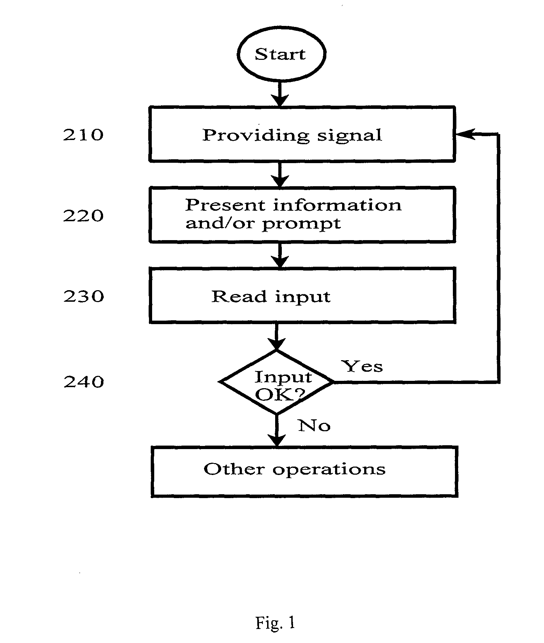

Fig. 1 is a schematic representation of a flowchart, depicting how the invention may use explicit comparison. After initialization, Start, a signal is provided, 210, said signal comprising at least one variable utility informational part and at least one variable informational contents part. Any information comprised in the signal is presented, 220, to a person. The informational contents part will prompt the person to perform an input. Next input is read, 230, by monitoring any detected input or the absence thereof in at least one time window. Following, an explicit comparison, 240, will determine if the input is correct. If it is, the operations 210, 220, 230, and 240 are repeated. The operations 210, 220, 230 and 240 correspond to the steps a), b), c), and d), respectively. If the input is not correct, other operations are initiated.

Note that the steps does not have to be performed in the order a), b), c), and d), but may be performed in any order, which is suitable for the purpose, even repeating steps where needed, or performing them simultaneously. For an example of another suitable order of execution of the operations, see below.

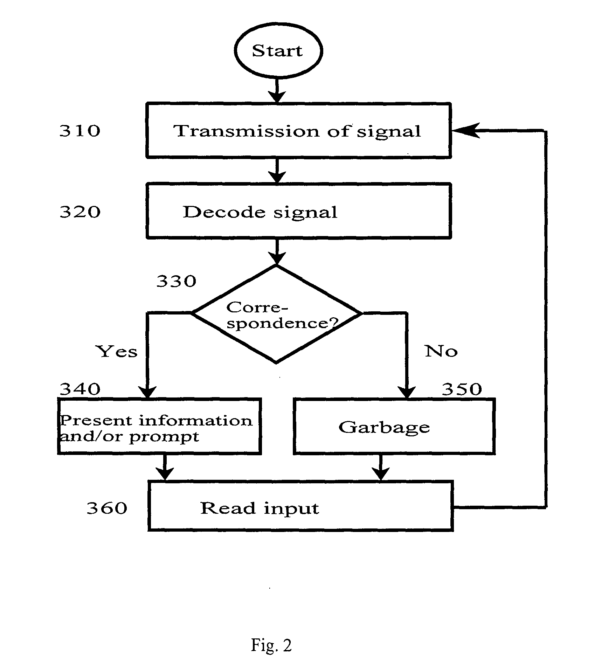

Fig. 2 is a schematic representation of a flowchart, depicting how the invention may use implicit comparison. After initialization, Start, a signal is transmitted, 310. The signal may be encoded. Next the signal is decoded, 320. For the very first cycle the signal will usually not need to be decoded, or the necessary decoding key may have been transmitted at initialization. Any known key is thus used to decode the signal in operation 320. This, and the next operations, 330, 340, and 350, together form the operation of implicit comparison and the dependent operations. If the decoding has been done correctly, because of correspondence between key and the way the signal is encoded, any information comprised in the signal is presented, 340. If not, garbage is presented, 350. Note that the operation 330 is not an explicit comparison. The method may be unaware whether the decoding is correct, only a person using the method may be able to notice. The method reads input, 360. Such input may suitably be the future key for decoding the signal. Finally the operations are repeated from the operation 310. The operation 310 correspond to step a), operations 320 and 330 correspond to step d), operation 340 correspond to step b) and operation 360 correspond to step c). Note that the method may continue transmitting a signal, independent of the correctness of the input it receives.

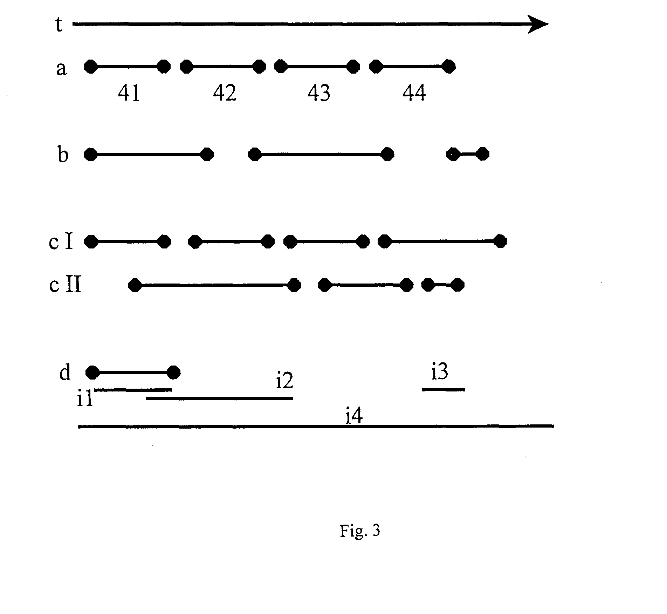

Fig. 3 is a schematic representation of some possible sequences of transmission and/or presentation of information. At the top is an time arrow, t, indicating the direction of time. Below are sequences according to the present invention. Suppose a method according to the present invention is transmitting a signal comprising images. The transmission of images are represented by lines with dots at both ends. In one embodiment, a, such images, 41, 42, 43 and 44, are transmitted one after another. Any or all of the images may comprise the utility informational part or the informational contents part according to the present invention. In another embodiment, b, the images are interrupted by pauses, and have an unequal length in time. In a third embodiment, more than one image may be shown, and the images in the series c I and c II may be overlapping in time and/or physically, e.g. on a screen. In the forth embodiment, d, only an image comprising the informational contents part is indicated in the figure. This is for the purpose of illustration only, not to exclude the existence of other images in the sequence. Furthermore, four lines, i1, i2, i3 and i4 are shown, to indicate different possible time windows, for monitoring any detected input from a subject. Thus, such monitoring may be done simultaneously with the transmission of the image, i1, overlapping and after the transmission of the image, i2, after the transmission of the image, i3, or all the time, independently of the transmission of the image, i4. Thus, the time window may also have its beginning before the transmission of the image. All of the abovementioned embodiments and/or time sequences for transmission and/or display of images and/or time windows may be combined.

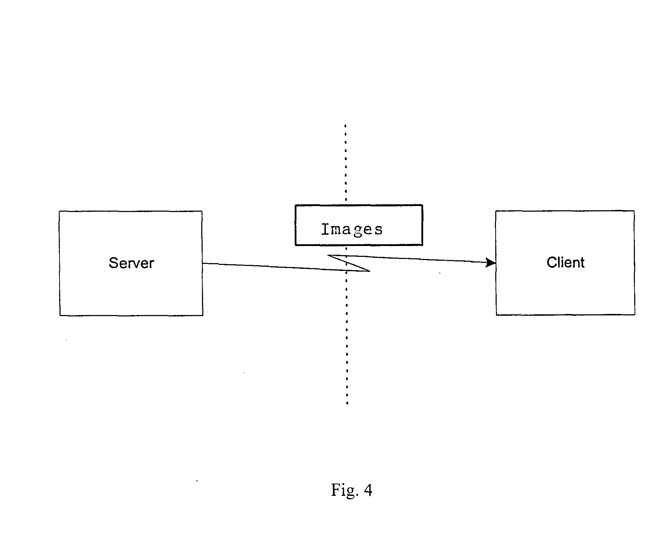

Fig. 4 is a simple, schematic representation of the relation between a server and a client. The server in this embodiment provides the client with a signal comprising images. By transmitting said images, comprising commercials and passwords, e.g. control digits, the provider can ensure commercials are exposed for the user. The data comprising the control digits, in e.g. ASCII format, should be present in the server, not in the client, while the data representing the digits as an image should be transmitted to the client. Thus, a real person will have no difficulty interpreting the signal seeing the image, while a program provided by a hacker will have difficulty interpreting the image representing control digits. In order to further enhance the quality of the system the images can be altered in different ways. Note that the client only receives the images from the server, not the control digits in ASCII format. Fig. 4 thus illustrates, that the knowledge of the client is limited, as compared to the server.

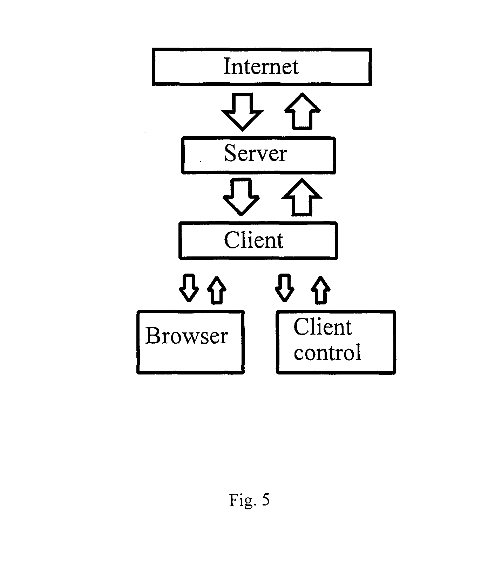

Fig. 5 shows schematically a system comprising at least one server and at least one client. A server controls a client. "Client control" handles input and output with respect to at least one subject (not shown). The client control may use a separately displayed window to show images and/or a streamer with news. The client may furthermore control access of information to and from a browser. The server is connected to the internet and directs and controls the flow of information to and from the internet and to and from at least one client.

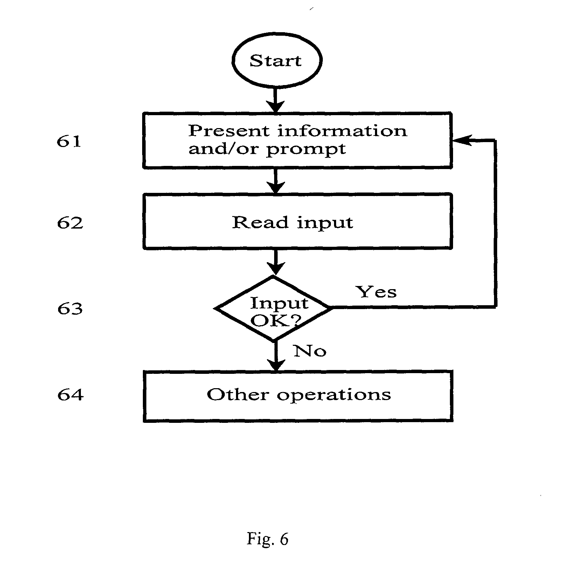

Fig. 6 shows a simplified flowchart, representing operations performed by an embodiment of a client. After initialization at Start, the client will begin to present information and/or a prompt, which it is receiving, 61. The client will read input, 62, and transmit the input to a server. If the input is OK, 63, the client will continue to present information and/or a prompt, 61. If not, the client will perform other operations, 64.

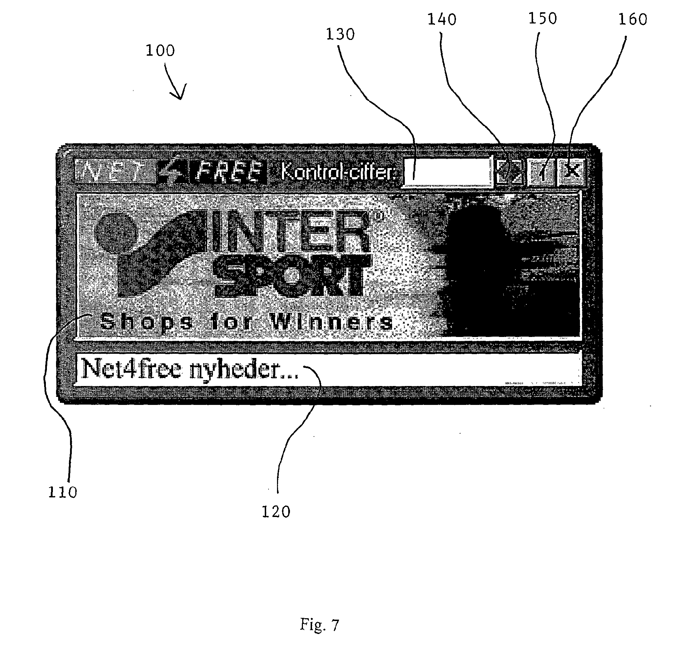

Fig. 7 shows a window 100 for client control, comprising a commercial display part 110, an information/news display part 120, a control digit input part 130, a corner movement button 140, an information button 150, and a close button 160.

In the commercial display 110 commercials are continuously changing. The corner movement button 140 can be used for moving the window 100 to one of the corners of the screen.

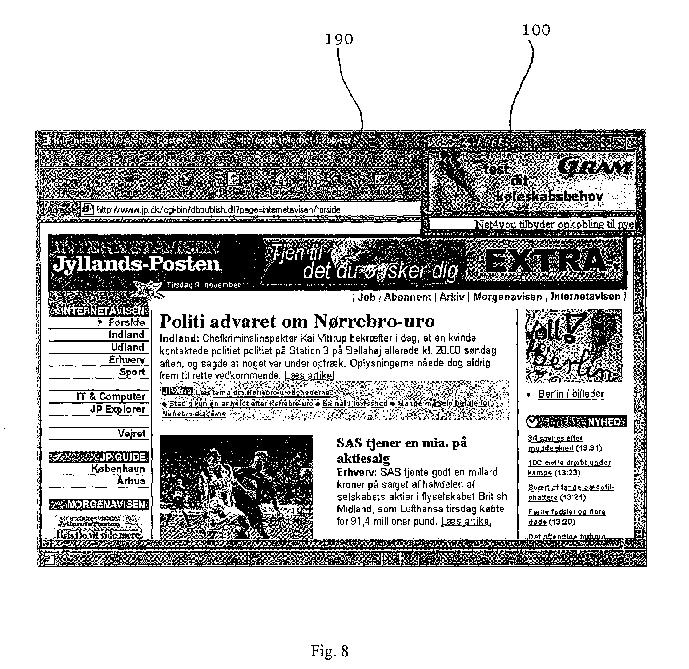

Fig. 8 shows a client window 100 for client control, on top of a running browser 190. Note that the appearance of the client control may differ during run. The window may change size depending on the resolution of the screen. Preferably the client window 100 is always displayed on top of other running applications.

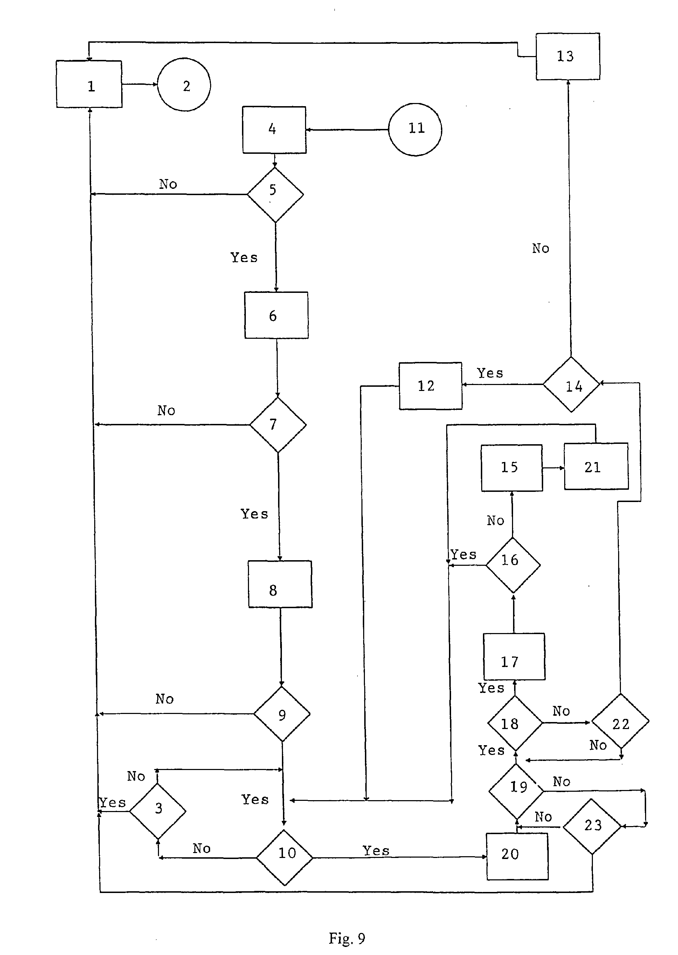

Fig. 9 shows a flow chart, representing tasks of the client. The reference numbers describing the operations of a client program on the flowchart represents the following text:

1. Inform user about error
2. Stop
3. xx times?
4. Connect to server
5. Connection?
6. Transmit user name
7. Login?
8. Transmit password
9. Connected?
10. Image source?
11. Start
12. Send control digits
13. Discontinue
14. Control digits?
15. Start timer AA with interval = 10 sec
16. Timer AA startet?
17. Ekspose image
18. Timer AA end?
19. Image received?
20. Fetch image
21. Start timer BB with interval = 300 sec
22. Timer BB end?
23. yy times?

The flowchart and the client operations represented therein will be described below.

The client is initialized, 11. The client will then attempt to connect to server, 4. Next the client will check if there is established a connection, 5. If there is not, an error message is displayed, 1, and the client stops, 2.

If there is a established a connection at 5, the client will transmit a user name to a server, 6. Then the client checks if it is logged on, 7. If not, an error message is displayed, 1, and the client stops, 2.

If the client is logged on, it will send a password, 8, and check if it is still connected (or have been refused by the server), 9. If it is not connected, an error message is displayed, 1, and the client stops, 2.

If the client is connected, it checks whether it has received an image source, 10, i.e. the address of an image. If not, the client will wait for an image source, by running a loop, wherein it is checked, at 3, whether the loop should be halted, by checking the number of times the loop has been repeated. If the loop has been repeated xx times (e.g. 100), an error message is displayed, 1, and the client stops, 2.

If the client has received an image source, it will begin to fetch the image, 20. Again the client will run a loop, checking, at 19, if the image has been received, if not, it will check, at 23, the number of times the loop has been repeated. If the loop has been repeated yy times (e.g. 100), an error message is displayed, 1, and the client stops, 2.

If the image has been received, the client will check if a timer AA has run out, 18. The very first time the client meets this question, it will answer yes. The client then displays the image (on e.g. a monitor), 17. Then it is checked if the timer AA has been started, 16. If not, it will start it, 15, and give it a time interval of e.g. 10 sec to run. Next it will start timer BB, 21, and give it a time interval of e.g. 300 sec. Timer AA decides the frequency of change of images, while timer BB decides the average frequency of input of control digits.

As depicted in the flowchart, when timer AA runs out, the client will receive a new image source, fetch the image and display it. Thus, images are changed with a 10 sec interval. When timer BB runs out, which is checked at 22, if will check if the user has entered any control digits, 14. If not, the client discontinues the internet connection, 13, an error message is displayed, 1, and the client stops, 2.

If the user has entered control digits, these will be send to a certain server, 12.

Note that in this embodiment, it is the task of the server, not the client, to check whether the control digits are correct. If the control digits are wrong, the server may choose to discontinue the connection. Note also that control digits may be input at any time, even that the correctness of the input are only checked with certain intervals.

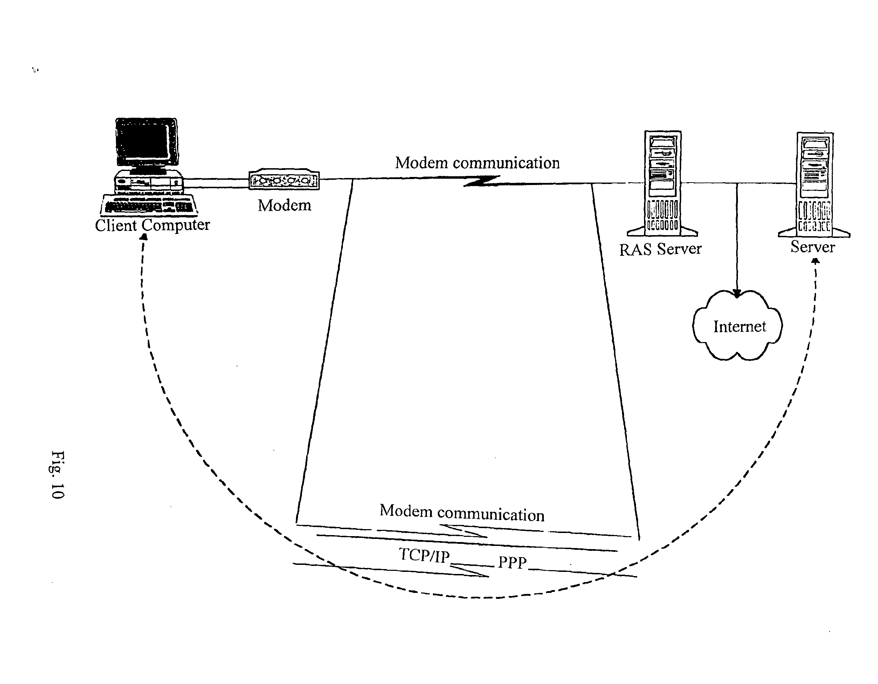

Fig. 10 shows the relationship between a client computer and servers according to an embodiment. A client computer may be connected with the use of a modem and a modem connection to a RAS server (see below), which controls the access to the internet. The RAS server receives the call from the modem, and a physical connection is established between the two. The RAS server is here a physical server, i.e. a piece of hardware. The RAS server may further be controlled by at least one other server, which may be physical or logical. For simplification, assume it is a logical server, denoted server. It may thus be on the same physical server as the RAS server, or on another physical server. The logical server will decide whether the client has access to the internet and pass this information to the RAS server. In order to serve many users, more than one physical RAS server and/or other servers may be used. The dotted line depicts communication between the client computer and the server. The modem communication depicted above in the figure as a flash, is shown enlarged below. The modem communication may be handled by a PPP protocol. The internet communication is performed using the TCP/IP protocol, and used for the communication between client and server.

The "TCP/IP communication" is further described below. TCP/IP is a package based network protocol, which has been described in a series of documents (knows as RFC, Request For Comment), which are freely available both in the literature and on the internet:

ftp://ftp.sunsite.auc.dk/pub/ietf/rfc/

The details of the specific use of TCP/IP may be as follows. The communication between a user of the internet and the internet may be provided by the use of a modem, which gives the user access to the internet. This may happen with the use of hardware known as a RAS (Remote Access Server) system. The RAS system is basically an assembly of modems, which receive the user. These modems communicate by the use of a protocol named PPP (Point-to-Point Protocol) (further described in RFC, see above), establishing network communication between the RAS server and the computer of the user. Now, the computer of the user may be regarded a part of the internet.

The advantage using a RAS server is, from the point of view of the system, that it allows to terminate or break the users use of the internet.

In order for the user to use the internet, the user should, after establishing a connection to the internet using the RAS system, establish a network communication to an exposure system according to the present invention. If not, the user will be stopped. After this, the system will allow the user to use the internet, as long as the person transmit the correct passwords back to the system (Fig. 10)

After all exposures have been completed, either the user may be disconnected, or it is possible to allow the user to continue the use of the internet, e.g. by allowing the user to pay per minute.

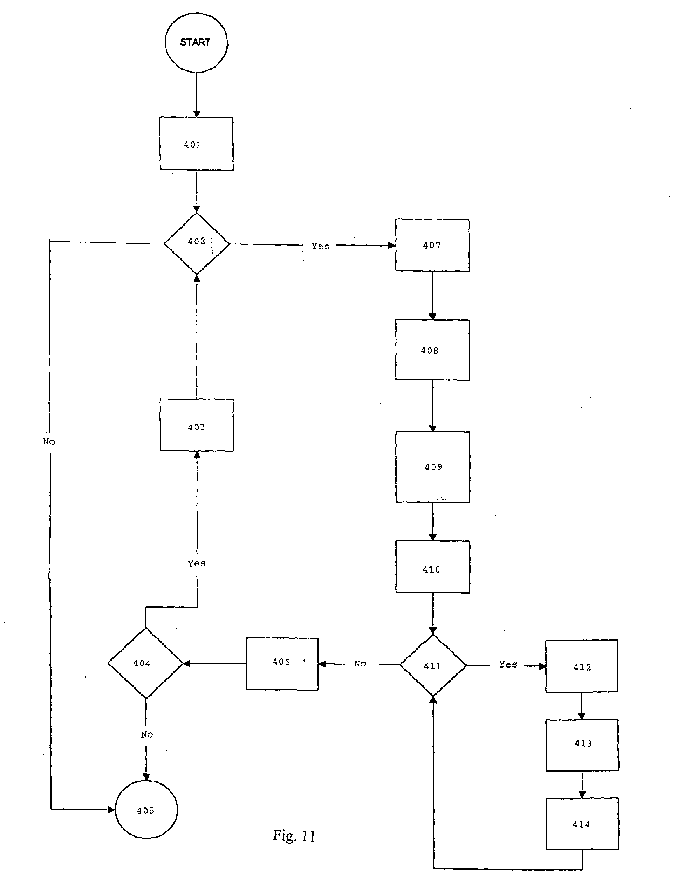

Fig. 11 shows a flowchart, representing operations of a server according to an embodiment. The reference numbers on the flowchart represents the following text:

    401. i:=1
    402. i<=6?
    403. i:=i+1
    404. Password correct?
    405. STOP/Disconnect
    406. Request password
    407. Shuffle/mix commercials in random order
    408. Make password a random number between 00 and 99
    409. Select one commercial and insert password as graphics
    410. j:=1
    411. j<=60?
    412. (1) show commercial
    413. Pause 10 sec
    414. j:=j+1

The server is initialized at START. A counter variable for number of cycles, i, is reset at 401. At 402 it is checked whether i is below a certain limit. If it is, commercials are shuffled, 407. Then the password is chosen to be a random number, 408. Next one commercial is chosen, and the password is embedded in this commercial, 409. The counter j is reset for each cycle, 410. At 411 it is checked whether the counter j is below a certain limit. If it is, (1) a certain commercial is displayed, 412. The commercial is shown for a certain time interval, e.g. 10 sec, 413. Next the counter j is incremented, 414, before operation 411 is repeated. After all the commercials have been shown, a password is requested, 406. Then it is checked whether the password was correct, 404. If it is, the counter i is incremented, 403, before proceeding to operation 402. If it is not, the transmission is interrupted, 405.

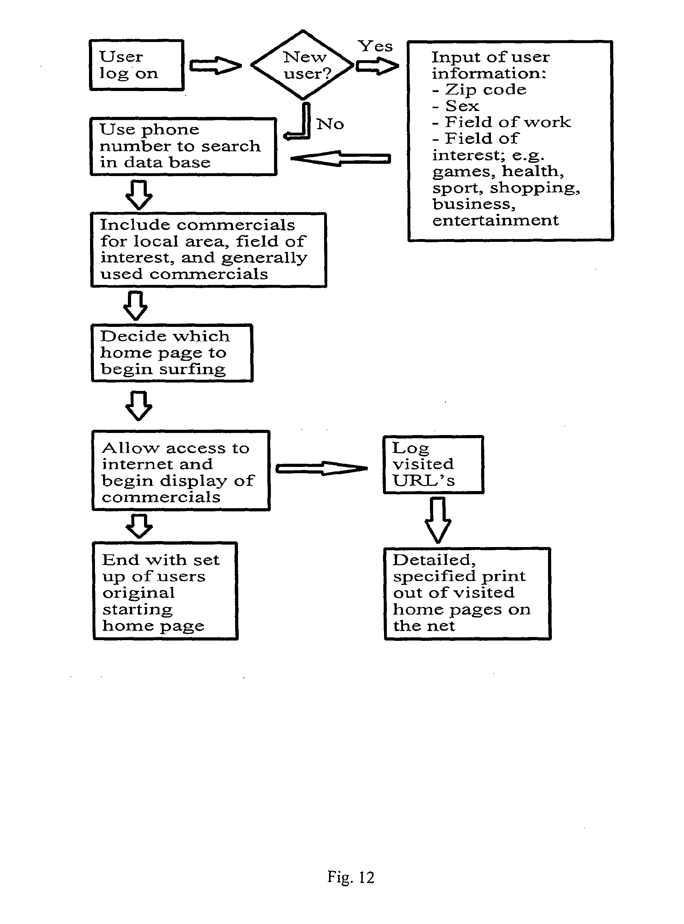

Fig. 12 shows schematically how a segmenting procedure could be arranged. The user will log on or be logged on when using the present invention to initiate a connection to the internet. The system will determine whether the user is new to the system. If the user is new, he/she is requested to volunteer information, which might e.g. be place of residence, zip code, sex, field of work, field of interest, games, health, sports, shopping, business, entertainment, etc. After the information has been input, or in case the user is not new, the user's phone number is used as identification. The system searches in a database in order to find commercials which correspond to e.g. the local area and the fields of interest for the individual user, and other commercials to be shown to all users. Then the system decides which home page to begin surfing. The system allows access to the internet, and begins display of commercials. Next, the user is free to surf the internet. However, all visited URL's will be recorded, or logged by the system, and, finally, the system is able to extract a full, detailed specified print-out of all the visited home pages on the internet, in order to gain further information about the user.

It is possible to combine any of the methods according to present invention with segmentation of the users of the system. As outlined in Fig. 12, the users, if more than one, might be segmented according to e.g. age, place of residence, sex, interests, income, type of job, etc. Subsequently, adequate commercials might be shown to the user. This also gives the possibility for the user to have a certain choice of the commercials that he/she would like to receive.

The method may be used for protecting a "payload" or payload information. The payload may be a service, which the recipient would like to receive, and which the method should protect. Examples of such payloads may be the internet, chat, support services, television, etc. The payload may further comprise information, which a provider of the service would like the recipient to receive, e.g. commercials.

Here, we assume the payload comprises the internet. More specifically the access to the global network known under the name of internet, which uses the TCP/IP protocol.

In one preferred embodiment, the present invention is used with an internet connection. The invention is applied to check whether a subject is perusing a commercial. If the subject is not responding to questions or messages embodied in the commercials, the internet connection is closed. The subject may have the benefit of having the fee for the internet connection subsidized by the company advertising. Said company has the advantage that the subject has to stay alert during the commercial, thus improving the information impact of the contents of the commercial.

The use of the present invention is illustrated with further embodiments, which can be used in various systems.

As a first example, there is provided a system, wherein a recipient or user receives free internet access, but have to accept a series of commercials from the internet provider. There is provided an independent program on a client computer, e.g. a PC, said client displaying the commercials and the data it receives from a server, and after a certain time interval, the client program should return one or two control digit(s), which has been provided on one of the commercials. The recipient have to peruse the commercials, in order to be able to enter the digits.

According to one embodiment at least two logical servers, or services (i.e. logical services) are used. The embodiment may further comprise one firewall, but this is not essential to the invention. The services may be situated on one physical server or computer, or they may be distributed on more than one physical server or computer. One of these services may be a Telnet service, while the other may be a FTP service. These services are allowed to communicate with each other. If a firewall is present, they are allowed to communicate with each other behind the firewall. A client program is situated on another physical computer, and is allowed to be connected to the two services.

Communication may be done with the TCP/IP protocol. The internet protocol allows several logical lines to be using the same physical line of communication. These logical lines provides a network. For an embodiment, file transfer and communication may use the same logical line or different logical lines of communication, which are using the same or different, e.g. Telnet and FTP, protocols.

In order to ensure security (it is difficult or impossible to circumvent the exposure of commercials), the system has a safe and an unsafe side. The safe side may be the server, while the unsafe side is the client. The server may be regarded safe, as it is not possible for a hacker to directly compromise the workings of the server. The client may be regarded unsafe, as it is possible for a hacker to gain control to change almost everything. The client may typically comprise a program, running on a computer. The client computer cannot be guaranteed to be safe, thus the program cannot be regarded as being safe for the hacker.

Security of the system in ensured by not allowing information pass to the client, which allows the hacker to circumvent the system. I.e. the client part never knows which images comprises the code, and the client part will not be informed that the code has been displayed, before the whole cycle of exposure is run to an end.

The client is allowed to request information freely from the FTP service, but its access to the Telnet service is restricted. It is e.g. allowed to send the control digits to the Telnet service, which runs entirely in an ASCII protocol. The Telnet service provides the address of the images, i.e. the image source. The client is then able to request the image from the FTP service. The FTP protocol may allow the transfer of large files, say 1 MB, while the Telnet protocol may be restricted only to communicate fewer bytes, e.g. the addresses of the image files, passwords, control digits, etc. The addresses of the images may comprise e.g. 50 bytes. This provides a further security aspect of the present invention, because a hacker will not be able to transfer a virus to the Telnet service, because of the limited access, which may be restricted to allow transfer of a few bytes of information from the client to the Telnet service. Images might be generated by the Telnet service, but are communicated to the FTP service. (If a firewall is present, behind this). The client receives all the images from the FTP service. In this way the FTP service serves as a temporary storage for the images. All the images should not be permanently stored on the FTP service, but only copied from the Telnet service when needed. This means that the client, even if a hacker has altered the function of the client, is only able to fetch a limited images at a time, usually only one image at a time. A firewall may serve as a "funnel" for the communication between the services and the client. While in this example a Telnet and a FTP service is used for explanatory reasons, a person skilled in the art may use any appropriate protocol.

According to a preferred embodiment of the present invention, the method according to the present invention may generally be described as comprising the process of exposure of a number $x$ of randomly chosen pictures, each in a time period of $z$ sec. In a number $y$ of the $x$ chosen pictures are embedded a visible code in the pictures, said code to be input later by the subject, to ascertain the pictures have been exposed to the subject. The method may be repeated a number of $n$ times, as long as the subject correctly enters the code, and as long as desired.

Said numbers $x$ and $y$ are integers, preferably 1-1000, more preferred 2-500, preferably 3-100, and $x$ is larger than or equal to $y$. Said number $z$ is preferably 0,01-300, more preferred 0,03-100, preferably 0,5-60, more preferred 1-30, preferably 2-20, more preferred 3-15 or preferably 10. Said number $n$ may be 1-100, preferably 3-10, more preferred 6. The person skilled in the art may from time to time change these parameters in order to make the method harder to hack, i.e. for security reasons.

As an example of this embodiment, a sequence consisting of 30 commercials is exposed to a subject 6 times, the commercials are to be exposed at 10 seconds interval, and for each sequence a code is embedded in a commercial or is replacing a commercial, and said code should be entered by the subject for the next sequence to proceed.

In a preferred embodiment the user is free to input control digits at any time, by changing focus to the window for the client control. Of course, the correct reply will only be known when it has been displayed. Thus, time windows would extend from a point in time when the client has just tested whether an input is present and ready, and until the next such test; the very first time window beginning when the client program is initialized.

In order to make it difficult for a hacker to provide a program, which may recognize and filter off known commercials without numbers embedded therein by simply comparing commercials from one sequence with earlier sequences, the present invention comprises methods for varying the pictures. One way of doing this is by varying the contrast. Other variations might be embedding noise, varying the RGB tones, or the brightness. Said variations are preferably slight variations in order not to be visually annoying. This means that a human subject should still be able to recognize the picture or the commercial, and, preferably, the variations are so small that they are not noticed by the human eye.

In one embodiment a provider supplies an internet connection, and the subject is free to surf the internet. The internet connection is payed by a sponsor, who in turn gets exposure of commercials. 60 commercials are repeated every 10 minutes, leading to an average exposure time of 10 seconds. At least one of the commercials contains a number, e.g. from 00 to 99, which the user has to input by the keypad in order for the commercials to keep running and the internet connection open for surfing the internet. If the commercials where not encoded in any way, it might be easy for a hacker to make a program, which recognizes said 60 commercials. In order to prevent this, the present invention provides a method for altering the commercials for each run. Preferably, the alterations are small and subtle in order for them not to be detected by the subject's eye. Thus, the subject does not notice the alterations and will identify the commercials, which are repeated every 10 minutes, as being virtually identical. However, such alterations will make it difficult for a program made by a hacker to recognize the commercials. The alterations may be made in numerous ways, using noise, light, color(s), e.g. RGB, alterations, pixel(s) alteration(s) or displacement(s), sounds, etc., in order for electronic tools not to be able to detect repeats of the same commercials. Using such a system, the subject will at most be able to use the internet connection 10 minutes, before the subject has to respond to a signal.

The respond signal is usually embedded at random places in the sequences of commercials.

The alterations of the signal including the commercials are preferably made in various ways, to make it difficult for at hacker to intervene in the system.

Thus, the present invention may be used together with bit-mapped pictures, and at least one pixel may be changed for each exposure to the subject.

In order to further elucidate the invention we provide a program in pseudo code which may be run on a server. The server is supposed to be connected to a client, which accepts input and display output.

Pseudo code 1:

```
START
For i = 1 to 6 do
        place commercials in random order
        select password to be random number
                            between 00 and 99
        choose one commercial and insert password as
                            graphics
        For j=1 to 60 do
            (1) show commercial j for 10 sec
        End for
        request password
        If password not correct break
    End for
    STOP
```

The line (1) may be changed to:
    (1) show commercial j with random minor change of contrast for 10 sec
Other variations may consist in embedding noise, variation of RGB tones or variation of brightness.
One most preferred embodiment of the present invention will now be described.
A client program is installed on a computer. When started by a user, the client program establishes a connection to a server. The client program will determine the nature of at least one browser installed on a user's computer, start the browser, and establish an on-line connection by dialing an internet provider having a server. The client program makes a browser run on the computer, as well as opens a separate window for client control, which may be moved around on the screen independently of the running browser.
The separate window for client control or client output and input will show changing images of commercials. Should the user wish to, the user may click on a commercial, and the client program will make the browser jump to a relevant or corresponding home page on the internet. The separate window for client control furthermore comprises a running news stream, which also may be clicked, in order to gain information about the news displayed. In another embodiment of the present invention, the commercial part and a running news stream are in separate windows.
The client program handles separation of information to the browser and to the client program. The client program furthermore controls the internet connection. It may take control of the browser, deciding which home page to show. The client program ensures that the separate window for client control scales corresponding to the screen size and/or resolution used.
The client program will receive instructions from a server, to which it is connected. It will receive commercials in the form of images which the client program displays on the computer screen to be presented to the user. In the most preferred embodiment, a control number is prompted every 10 minutes, e.g. at a control time interval of 10 minutes. Said control number is displayed once at random in the 10 minutes control time interval. The client program receives said control number as an image, which contains a two digit control number 00-99. The client program is not able to distinguish between images containing a control number and images containing a commercial and handles all images in the same way. When the 10 minutes control time interval has elapsed, the client program prompts for a control number. The user now has to make sure that a two digit number is entered without return. Said number is input for the client program, which communicates the number to the server. The server compares the input number with the control number. If the number is not correct, the internet connection discontinues, while the connection is continued if it is correct. Thus, the user may continue to use the internet connection as long as correct control numbers are input at the 10 minutes interval. The control number may be input at any time after having been displayed until it is prompted.

Failure to do so in 10 seconds after the prompt will discontinue the internet connection.

While not confining the present invention, assume an internet connection is provided, which is using a 33.6 kb modem to communicate with a server. By using commercials which have a size of 4-6 kb typically 10% of the internet connection band width will be used for transfer of commercials from a server to a client application.

In the preferred embodiment, 60 commercials are shown during a 10 min time period. Every 10 min, a control number is requested. Said number has been displayed by the client program to the user at a random point in time in the 10 min time interval. The server will stop the transfer of information if the number is not correctly answered. E.g. 15 variants of each commercial may exist.

The image comprising the control number which is transmitted at a random time, will in all aspect be handled by the client as a usual commercial. This aspect makes it hard for a hacker to tamper with the client, in order for it to reveal which image contains the control number.

One of the advantages when using a time window is that other characters, which have been entered before the number is supposed to be entered, may be filtered off. The time window may in other less preferred embodiments be chosen to encompass basically all or any points of time and/or time periods, thus allowing the user to enter a number at any moment in time.

Random points in time may be chosen and random numbers might be generated using a random number generator. Any suitable random number generator may be used. A random number generator to be used with the preferred embodiment of the present invention may, in brief, be described as follows (and will be well-known to a person skilled in the art) : A next seed number, $S_n$, is calculated from a former seed number, $S_{n-1}$, by using:

$$S_n = (S_{n-1} * p + q) \bmod r$$

wherein $p, q, r$ are primes, preferably large,

$$r_n = S_n \bmod \text{interval,}$$

said interval determining how large the interval should be, e.g. 100 for a random number, $r_n$, 0-99. "mod" is short for modulus. As the first seed number to initiate the routine any suitable number may be used, e.g. an integer. More information on the generation of random numbers may be found in Donald E. Knuth, The Art of Computer Programming vol 2, Seminumerical Algorithms, Chap. 3 (about random algorithms), Addison Wesley, ISBN: 0-201-89684-2.

Of course, it will be easy for a person skilled in the art to provide sufficient variation in the number of images and in the number of variants and/or the ways to vary the images.

In the most preferred embodiment of the invention, the focus of several windows shown on a screen is controlled by the user, who may change focus simply by clicking on a window. A control number may be input at any time from it is first shown until it is prompted. Thus, the time window may be from a control number is first shown, until it is prompted, or it may be the time interval between prompts. Randomization of images makes it likely that most commercials have actually been shown to the subject, after a few control numbers have been entered.

In order to elucidate the invention, below is provided an algorithm "shuffle_commercials" for placing a number of images in random order, i.e. randomization of the images. The algorithm is written in "C". The function "rnd(x)" returns a random integer between 0 and x. We assume that the array "commercial[]" is going to contain the order of exposure of the commercials. We further assume that "number" is the number of commercials, and that the commercials are numbered from 1 to "number".

```
Void shuffle_commercials(int number, int *commercial)
{
        int i, pos, tmp;
        int rnd(int);


        for (i=0; i<number; i++)
            commercial[i]=i+1;
        for (i=0; i<number; i++) {
            pos=rnd(number);
            tmp=commercial[i];
            commercial[i]=commercial[pos];
            commercial[pos]=tmp;
        }
}
```

Running this code will shuffle the numbers contained in the array "commercial[]", thus deciding the order they may be presented.

Additionally we provide an example illustrating how to insert a password on a commercial.

An image, e.g. representing a commercial, may be provided with a text, which may be the informational contents to be prompted. Methods for providing images with text are known in the art. There exist many public domain software libraries which can handle this operation, as well as load images, manipulate images, draw graphs etc., on the fly. An example is the program library "gd". The home page for this is:

http://www.boutell.com/gd

The latest version of the program package was obtained as:

ftp://ftp.boutell.com/pub/
boutell/gd/gd-1.8.1.tar.gz

The person skilled in the art will recognize many more such program libraries for e.g. inserting text on images.

The actual variation of an image may be performed in many ways. Many programs are known for this purpose. The variation should preferably not be visible for the user. For purposes of illustration in an embodiment were used an Open-Source (free software or freeware) program package, known as Image-Magick. The home page is:

http://www.imagemagick.org/

And the package may be found at:

ftp://ftp.wizards.dupont.com/pub/
ImageMagick/ImageMagick-5.1.1.tar.gz

This package comprises a program, "convert", which can handle images. The following are examples of command lines for "convert", which can vary images sufficiently to make them almost impossible to recognize for a program as being identical, but which are not disturbing visually, or are visually identical, for a person looking at them:

convert -blur 1 -normalize -dither <org> <new>
convert -enhance -normalize -gamma 0.6 <org> <new>
convert -sharpen 1 -modulate 10 -normalize <org> <new> where <org> is the original image (e.g. a GIF image) and <new> is the name of the generated image.

Needless to say, many other operations and/or programs may be used. Such alterations and substitutions will be obvious for the person skilled in the art. The images may be blurred, normalized, enhanced, sharpened, zoomed, shrunken, enlarged, in order to be perceived identical, while being physically different.

Industrial application of the present invention is clear from the description above. Further variations and embodiments of the present invention will be obvious to a person skilled in the art. Any range or device value given herein may be extended or altered without losing the effects sought, as will be apparent to the skilled person for an understanding of the teachings herein. All the references mentioned in this application are embodied by reference. The contents of the internet addresses were present at the time of filing of the present application.

**Claims**

1. A method for ensuring conscious response from a person to a signal; wherein said method is adapted to perform the steps of

   a) providing a signal varying in time and comprising at least one variable utility informational part and at least one variable informational contents part;
   b) presenting said signal to said person, said informational contents part prompting said person to perform an input;
   c) monitoring any detected input or the absence thereof from said person in at least one time window;
   d) initiating one of at least two different operations depending on correspondence between said input or the absence thereof and a predetermined reply, at least one of said operations comprising repetition of the steps a), b), c), and d).

2. The method according to claim 1, wherein the correspondence in step d) is evaluated by explicit or implicit comparison between said input and said predetermined reply.

3. The method according to claim 1 or 2, wherein at least part of said signal is encoded, allowing correspondence between said input and said predetermined reply to be necessary for decoding said encoded part of said signal.

4. The method according to any of the preceding claims, wherein correspondence between said input and said predetermined reply is a prerequisite for subsequent correct presentation in said step b).

5. The method according to any of the preceding claims, wherein the utility informational part comprises the informational contents part, or the informational contents part comprises the utility informational part.

6. The method according to any of the preceding claims, wherein the predetermined reply depends on the contents of the signal, the contents of the informational contents part, the time of presentation of the informational contents part, or any combination thereof.

7. The method according to any of the preceding claims, wherein the signal is subjected to a variation comprising changing the signal, said informational contents part of the signal, said utility informational part of the signal or any combination thereof.

8. The method according to any of the preceding claims, wherein informational contents parts are presented with random intervals.

9. The method according to any of the preceding claims, wherein at least one of said operations in step d) comprises termination of said method.

10. The method according to any of the preceding claims applying at least one computer.

11. The method according to any of the preceding claims, said method applying at least one client and at least one server, said server being adapted as to perform said step d).

12. The method according to any of the preceding claims, wherein a server is restricting the access of a client to the internet, depending on correspondence in said step d).

13. The method according to any of the preceding claims, wherein said step a) and said step d) are performed using at least two different logical servers.

14. The method according to claim 11, wherein said client is adapted to perform said steps b) and c).

**15.** The method according to any of the preceding claims, wherein said method is applying at least one network connection, said network connection being disconnected if said input from said person does not correspond to said predetermined reply.

**16.** The method according to any of the preceding claims, applying a network connection chosen among internet connection, point-to-point connection, point-to-multipoint connection, or any combination thereof.

**17.** The method according to any of the preceding claims, wherein said signal comprises a visual signal.

**18.** The method according to claim 17, wherein said signal comprises an image, said image being subject to a variation comprising an alteration of at least a part of said image, said alteration being chosen among distortion, symmetry operations, mirroring, turning, rotation, displacement, shifting, expansion, shrinking, zoom operation, insertion of at least one pixel, deletion of at least one pixel, insertion of at least one line of pixels, deletion of at least one line of pixels, alteration of at least one pixel, alteration of at least one line of pixels, change of color, change of at least one RGB tone, inclusion of noise, or any combination thereof.

**19.** The method according to any of the preceding claims, wherein said signal comprises an auditory signal.

**20.** The method according to claim 19, wherein said signal is subject to a variation, said variation comprising an alteration of at least a part of said auditory signal, said alteration being chosen among volume control, frequency shift, damping, amplification, or any combination thereof.

**21.** The method, according to any of the preceding claims, wherein said input is performed on a device chosen among keyboard, keypad, joystick, trackball, mouse, touch sensitive screen or any combination thereof.

**22.** The method according to any of the preceding claims, wherein said utility informational part comprises a sequence of commercials, at least one of which being altered digitally, which alteration makes said digital representation of said commercials differ while being recognizable as the same commercial by said person.

**23.** The method according to any of the preceding claims, wherein said informational contents part comprises at least one image representing an integer number, and said predetermined reply is said number.

**24.** The method according to any of the preceding claims, wherein step b) comprises display of a number *x* of randomly chosen images to said person, each in a time period; a number *y* of said *x* randomly chosen images comprising at least one visible part comprising informational contents part in said images, said numbers *x* and *y* being integers.

**25.** The method according to any of the preceding claims, wherein said method is implemented using at least one computer program.

**26.** The method according to any of the preceding claims, wherein a decoder is employed for receiving said signal, said decoder being adapted as to allowing said input to be used by said decoder.

**27.** Use of a method according to any of the preceding claims for distributing commercials.

**28.** A system for performing the method according to any of the preceding claims.

**29.** The system according to claim 28, which is performed on a computer.

**30.** A computer system for the evaluation of input from a person, comprising at least one server computer, at least one client computer, and network means for connecting said server computer and said client computer; said computer system being adapted to perform the method according to any of the claims 1-26.

**31.** A system for ensuring conscious response from a person to a signal, comprising at least one server, at least one client, and network means for connecting said server and said client; said system being adapted to perform the steps of

ai) allowing said server to provide a signal varying in time and comprising at least one variable utility informational part and at least one variable informational contents part;

bi) transmitting said signal to said client by said network means;

ci) allowing said client to present said signal to said person, said informational contents part prompting said person to perform an input;

di) allowing said client to monitor any detected input from said person in at least one time window;

ei) transmitting said input to said server by said network means;

fi) allowing said server to compare said input with a predetermined reply, and initiating one of at least two different operations depending on the result of said comparison, at least one of said operations comprising repetition of the steps ai), bi), ci), di), ei), and fi).

32. A computer program product directly loadable into the internal memory of a digital computer, comprising software code portions for allowing said digital computer to act as a client or a server according to claim 11, 12, 13, 14, 30 or 31 when said product is run on a computer.

Fig. 1

Fig. 2

Fig. 3

Server

Images

Client

Fig. 4

Fig. 5

61 Present information and/or prompt

62 Read input

63 Input OK?

Yes

No

64 Other operations

Fig. 6

Fig. 7

190    100

Fig. 8

Fig. 9

Fig. 10

Fig. 11

```
┌──────────┐         ╱╲  Yes    ┌─────────────────────┐
│ User     │ ══▶   ╱ New ╲ ══▶  │ Input of user       │
│ log on   │       ╲ user?╱      │ information:        │
└──────────┘         ╲╱          │ - Zip code          │
                      ║          │ - Sex               │
┌──────────────┐      ║ No       │ - Field of work     │
│ Use phone    │ ◀────╝          │ - Field of          │
│ number to    │ ◀══════════════ │ interest; e.g.      │
│ search in    │                 │ games, health,      │
│ data base    │                 │ sport, shopping,    │
└──────────────┘                 │ business,           │
      ║                          │ entertainment       │
      ▼                          └─────────────────────┘
┌──────────────────────┐
│ Include commercials  │
│ for local area, field│
│ of interest, and     │
│ generally used       │
│ commercials          │
└──────────────────────┘
      ║
      ▼
┌──────────────┐
│ Decide which │
│ home page to │
│ begin surfing│
└──────────────┘
      ║
      ▼
┌──────────────┐            ┌──────────┐
│ Allow access │            │ Log      │
│ to internet  │ ══▶        │ visited  │
│ and begin    │            │ URL's    │
│ display of   │            └──────────┘
│ commercials  │                  ║
└──────────────┘                  ▼
      ║                     ┌──────────────┐
      ▼                     │ Detailed,    │
┌──────────────┐            │ specified    │
│ End with set │            │ print out of │
│ up of users  │            │ visited home │
│ original     │            │ pages on the │
│ starting     │            │ net          │
│ home page    │            └──────────────┘
└──────────────┘
```

Fig. 12

## EUROPEAN SEARCH REPORT

**European Patent Office**

**Application Number**

EP 00 61 0031

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,D | US 5 997 476 A (BROWN STEPHEN J) 7 December 1999 (1999-12-07) | 1,11-14, 28-32 | G06F17/60 G06F17/30 |
| Y | * abstract * * figures 1,2 * * column 2, line 30 - line 46 * * column 2, line 53 - column 3, line 25 * * claims 1-4 * | 27 | |
| Y | US 5 794 210 A (GOLDHABER A NATHANIEL ET AL) 11 August 1998 (1998-08-11) * abstract * * figure 1 * * column 1, line 40 - line 50 * * column 1, line 62 - column 2, line 12 * * column 5, line 48 - column 6, line 22 * | 27 | |
| A | WO 99 26175 A (BANNER BUY L L C) 27 May 1999 (1999-05-27) * abstract * * page 2, line 27 - page 4, line 3 * * figure 1 * | 1,27,31, 32 | |
| A | US 5 838 790 A (MARSH BRIAN D ET AL) 17 November 1998 (1998-11-17) * abstract * * figures 1,3-5 * * column 1, line 20 - line 63 * | 1,27,31, 32 | **TECHNICAL FIELDS SEARCHED (Int.Cl.7)** G06F |
| A | US 5 806 043 A (TOADER ADRIAN) 8 September 1998 (1998-09-08) * abstract * * figure 1 * * column 1, line 15 - column 3, line 16 * | 1,27,31, 32 | |

-/--

The present search report has been drawn up for all claims

| Place of search | Date of completion of the search | Examiner |
|---|---|---|
| THE HAGUE | 24 August 2000 | van der Weiden, A |

## EUROPEAN SEARCH REPORT

European Patent Office

**Application Number**

EP 00 61 0031

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 781 894 A (WHITNEY ROBIN ET AL) 14 July 1998 (1998-07-14) * abstract * * column 1 * | 1,27,31, 32 | |

TECHNICAL FIELDS SEARCHED (Int.Cl.7)

The present search report has been drawn up for all claims

| Place of search | Date of completion of the search | Examiner |
|---|---|---|
| THE HAGUE | 24 August 2000 | van der Weiden, A |

**ANNEX TO THE EUROPEAN SEARCH REPORT
ON EUROPEAN PATENT APPLICATION NO.**

EP 00 61 0031

This annex lists the patent family members relating to the patent documents cited in the above-mentioned European search report.
The members are as contained in the European Patent Office EDP file on
The European Patent Office is in no way liable for these particulars which are merely given for the purpose of information.

24-08-2000

| Patent document cited in search report | | Publication date | Patent family member(s) | | Publication date |
|---|---|---|---|---|---|
| US 5997476 | A | 07-12-1999 | US | 5897493 A | 27-04-1999 |
| | | | AU | 9791098 A | 27-04-1999 |
| | | | WO | 9918532 A | 15-04-1999 |
| | | | US | 5985559 A | 16-11-1999 |
| US 5794210 | A | 11-08-1998 | AU | 1415397 A | 03-07-1997 |
| | | | CA | 2240314 A | 19-06-1997 |
| | | | EP | 0934570 A | 11-08-1999 |
| | | | JP | 2000501868 T | 15-02-2000 |
| | | | WO | 9722074 A | 19-06-1997 |
| | | | US | 5855008 A | 29-12-1998 |
| WO 9926175 | A | 27-05-1999 | AU | 1115399 A | 07-06-1999 |
| US 5838790 | A | 17-11-1998 | AU | 2456297 A | 12-11-1997 |
| | | | WO | 9740601 A | 30-10-1997 |
| US 5806043 | A | 08-09-1998 | US | 5774869 A | 30-06-1998 |
| | | | AU | 6029296 A | 24-12-1996 |
| | | | CA | 2223787 A | 12-12-1996 |
| | | | WO | 9639668 A | 12-12-1996 |
| | | | US | 5749075 A | 05-05-1998 |
| US 5781894 | A | 14-07-1998 | WO | 0000914 A | 06-01-2000 |

EPO FORM P0459

For more details about this annex : see Official Journal of the European Patent Office, No. 12/82